# EUROPEAN PATENT APPLICATION

(11) **EP 4 712 691 A1**
(43) Date of publication of application: **18.03.2026**
(21) Application number: 24398018.2
(22) Date of filing: 17.09.2024
(51) Int. Cl.: H05B 3/26, B60L 53/16

(54) **HEATING ELEMENT, ELECTRICAL CONNECTOR, CONNECTOR ASSEMBLY AND MANUFACTURING METHOD**

(71) Applicant: TE Connectivity Solutions GmbH, 8200 Schaffhausen (CH); Tyco Electronics Componentes Electromecânicos Lda, 7005-797 Évora (PT)
(72) Inventor: Huder, Lea, 8200 Schaffhausen (CH)
(74) Representative: Grünecker Patent- und Rechtsanwälte PartG mbB

(57) **Abstract**

The invention relates to a heating element (1) for a mating interface (18) of an electrical connector (2), wherein the heating element (1) comprises a cavity (28) configured to receive the mating interface (18) along a receiving direction (30), a carrier body (26) at least sectionally arched around the cavity (28), and a heating wire (36) held by the carrier body (26), wherein the heating wire (36) extends circumferentially with respect to the receiving direction (30) in a meandering pattern. In contrast to heating elements with helically coiled wires that have to follow a uniform path, the meandering pattern allows the heating wire (36) to be routed in a way that can be easily adapted to any irregular geometry surrounding the mating interface (18). This facilitates the integration of the heating element (1) in the electrical connector (2). Further, the present invention relates to a method of manufacturing such a heating element (1). Moreover, the present invention relates to an electrical connector (2) and a connector assembly (4) with such a heating element (1).

## Description

### Technical Field to which the Invention Relates

The present invention relates to a heating element for a mating interface of an electrical connector. Further, the present invention relates to a method of manufacturing such a heating element. Moreover, the present invention relates to an electrical connector and a connector assembly with such a heating element.

### Background Art

In certain technical fields, electrical connectors such as plugs and sockets of outdoor charging units can be exposed to harsh weather conditions. In particular, snow as well as rain or humidity in combination with freezing temperatures can cause the plugs and sockets to freeze together. This, in turn, can lead to the situation where a charged device, such as an electric vehicle, is stuck to its charging gun or charging station.

For preventing such a troublesome situation, integrated heating elements can be provided in the electrical connectors. However, known heating elements are usually subject to geometric limitations, lack efficiency or have other kinds of drawbacks.

### Technical Object to be Achieved

The object of the present invention is to provide improved means for protecting electrical connectors from frost.

This object is achieved by a heating element for a mating interface of an electrical connector, wherein the heating element comprises a cavity configured for receiving the mating interface along a receiving direction, a carrier body at least sectionally arched around the cavity, and a heating wire held by the carrier body, wherein the heating wire extends circumferentially with respect to the receiving direction in a meandering pattern.

Herein, the electrical connector may be a plug or socket of an outdoor charging unit, in particular a charging inlet of an electric vehicle. The mating interface receivable in the cavity may be a male, female or hermaphrodite interface. The carrier body is arched around the cavity in that it comprises a shape that completely encloses or at least partially surrounds the cavity in a circumferential direction with respect to the receiving direction.

The present solution is advantageous for the following reasons:

By extending circumferentially with respect to the receiving direction, the heating wire can trace the shape of the carrier body and hence also completely encloses or at least partially surrounds the cavity in the circumferential direction. Thus, thermal energy emitted by the heating wire can be concentrated in the cavity (i.e. the to-be-heated area).

To increase the surface area of the heating wire, the meandering pattern may follow a sinuous line, serpentine line, zigzag line, sawtooth line, square-wave line or any other arbitrary line that regularly or irregularly deviates away from and back towards a centerline. The heating element thus has a comparatively large heating area and is therefore more efficient. Further, the heating wire with the meandering pattern results in a lighter weight of the heating element compared to die-cast heating elements.

The centerline of the meandering pattern extends circumferentially with respect to the receiving direction and can be defined by an equalizing line that on average has the least square distance from each point of the heating wire.

Known heating elements with a helically coiled wire, which has to follow a uniform path along a fixed direction, are geometrically limited, since the coil diameter as well as coil pitch are the only available design parameters. In contrast to that, the meandering pattern allows the heating wire to be routed in a way that can be easily adapted to any irregular geometry surrounding the mating interface. This aspect, which will be explained in further detail below, facilitates the integration of the heating element in the electrical connector. Further, this aspect prevents blind spots where the heating effect is low. In other words, the meandering pattern can fill out and heat areas of the electrical connector that would be left unreached by a helically coiled wire.

When utilized in an electrical connector, the heating element of the present invention advantageously contributes to a reliable and efficient frost protection, frost prevention as well as frost removal and thus achieves the above-defined object.

The invention can further be improved by the following embodiments which are advantageous in themselves and which can be arbitrarily combined with one another.

According to one possible embodiment, the heating wire may comprise multiple straight sections interposed by multiple curve sections. Thereby, the meandering pattern can be achieved with simple design components. Herein, the curve sections may be obtained by bending, folding, deep drawing, stamping, extruding or by primary forming an already curved shape. The respective straight sections and the respective curve sections may be distributed circumferentially with respect to the receiving direction. In other words, each straight section may have at least one neighboring straight section in the circumferential direction. Likewise, each curve section may have at least one neighboring curve section in the circumferential direction. The straight sections may be grouped into pairs of neighboring straight sections and the curve sections may be grouped into pairs of neighboring curve sections.

In order to arrange the heating wire in a compact and dense manner, neighboring straight sections may be arranged at an acute angle with respect to each other. In other words, neighboring straight sections may enclose an angle range of 23° +/- 22°, that is an angle between 1° and 45°. Of course, the angle enclosed by some or all neighboring straight sections may be larger than 45°, in particular larger than 90°, and even more particularity, larger than 135°. Thus, depending on the required routing of the heating wire, a suitable angle between the respective neighboring straight sections may be chosen.

Herein, neighboring straight sections may be connected by one and the same curve section, while neighboring curve sections are each connected to different pairs of straight sections.

According to another possible embodiment with a particularly homogeneous distribution of thermal energy, next-nearest straight sections may be mutually parallel in that a distance between them remains constant along their entire length. Herein, next-nearest straight sections are two straight sections that are not immediately neighboring, but secondary neighboring. In other words, the next-nearest straight sections have their primary neighboring straight section located between them.

The heating wire may have a resistivity of at least 1 µΩm, in particular at least 1.1 µΩm, more particular at least 1.5 µΩm. In other words, the heating wire may be made of an electrically conductive material with a relatively high resistivity such as Nichrome or other types of Nickel-Chromium Alloys, Kanthal or other types of Iron-Chromium-Aluminum Alloys, Cupronickel, Constantan or other types of Copper-Nickel Alloys or Tungsten. Hence, to achieve a sufficient Joule effect, the heating element of the present invention does not require any additional resistors compared to known heating elements with highly conductive wire material. The absence of additional resistors not only reduces the manufacturing costs, but also prevents unwanted hot spots that create excessive thermal load.

The carrier body may be made of an electrically insulating, but thermally conductive material. Further, the thermal conductivity of the carrier body may be increased by additives such as carbon fibers. Along its entire length, the heating wire may be in direct contact with the carrier body so as not to lose any heat transfer surface by "hanging in the air".

According to another possible embodiment, the carrier body may comprise a cuff-, collar- or sleeve-shaped hollow structure. The cavity for receiving the mating interface may be located within and defined by said hollow structure. The concrete shape of the hollow structure is prescribed by the design of the specific electrical connector where the heating element is to be used. For example, the heating element may be adapted for use in charging inlets according to NACS or other charger standards. In particular, the shape of the hollow structure and the entire carrier body may fit the dimensions of the mating interface and an interior layout of the electrical connector. That is, the heating element can be integrated into the electrical connector in a space around the mating interface.

Optionally, the heating wire may at least sectionally extend within the material of the carrier body. Thereby, the heating wire can be protected against corrosion and mechanical damage. For example, the heating wire may be threaded through openings in the material of the carrier body. Alternatively or additionally, the carrier body may be entirely overmolded onto the heating wire or at least onto ends of the heating wire.

According to another possible embodiment, the heating wire may at least sectionally extend on an inner surface of the carrier body facing towards the cavity. Hence, the carrier body imposes no or at least less thermal resistance on the path between the heating wire and the cavity. In other words, the heating wire is closer to the heated area with no carrier body material in between.

Alternatively or additionally, the heating wire may at least sectionally extend on an outer surface of the carrier body facing away from the cavity. This can facilitate the manufacturing of the heating element, since the outer surface has better accessibility than the inner surface.

According to another possible embodiment, the carrier body may comprise a holding structure for the heating wire. In particular, the heating wire may be strung on the holding structure. This allows the heating element to be manufactured and repaired by purely mechanical and reversible steps. Further, the resistance of the heating wire can be increased by tensioning it, whereby the wire length is at least slightly increased and/or the wire cross-section is at least slightly decreased.

For example, the holding structure may comprise a plurality of holding ridges each extending along the receiving direction. These holding ridges may be distributed circumferentially with respect to the receiving direction. Hence, each holding ridge may have at least one neighboring holding ridge in the circumferential direction. Between two neighboring holding ridges, one of the straight sections of the heating wire may extend respectively. Hence, the holding ridges can separate and insulate the neighboring straight sections from each other. The heating wire itself can then be bare and requires no insulation.

Each holding ridge may have a straight, elongated rib or fin shape and may comprise two ridge ends aligned along the receiving direction. Further, on each holding ridge, one of the curve sections of the heating wire may be arranged. In particular, each curve section may wrap, loop or lead around one of the ridge ends of its corresponding holding ridge. For ease of reference, the ridge ends may be considered as left-sided ends or right-sided ends depending on their relative position. The curve sections may be arranged alternately on the left-sided ends and right-sided ends. Consequently, the heating wire can repeatedly pass around the nearest holding ridge and continue between the subsequent pair of neighboring holding ridges.

Alternatively, the holding structure may be formed by holding posts that are arranged alternately and distributed circumferentially with respect to the receiving direction. The holding posts fulfill the same function as the ridge ends, in that the curve sections are wrapped, looped or lead around them. The holding ridges or the holding posts may protrude from the above-mentioned hollow structure of the carrier body radially with respect to the receiving direction.

Many housings of electrical connectors have, as part of their interior layout, reinforcement ribs that extend towards or around the mating interface. For the heating element, these reinforcement ribs represent an obstacle that is to be avoided. In order to still fit into the space around the mating interface, the carrier body may comprise at least one axial slit extending along the receiving direction. The at least one axial slit may have an angular position that corresponds to the position of the obstacle.

Depending on the number of reinforcement ribs, the carrier body may comprise multiple such axial slits. These axial slits may be arranged at different angular positions in regular or irregular intervals. In each axial slit, one or more reinforcement ribs can enter. In other words, the axial slits of the carrier body make room for the reinforcement ribs.

The heating wire may swerve around and avoid each axial slit so as to stay clear from the room that is meant for the reinforcement ribs. In an otherwise periodic and uniform meandering pattern of the heating wire, blank spaces may be present wherever an axial slit is located. For example, those straight sections that are at the angular positions overlapping with the axial slits may be shorter than the remaining straight sections that have different, angular positions not overlapping with any axial slits.

Although the axial slits extend through the carrier body along the receiving direction, they do not penetrate the carrier body completely. In other words, the axial slits extend from one rim of the carrier body along the receiving direction, but do not reach an opposite rim of the carrier body. Instead, a material bridge remains between the respective axial slits and the opposite rim. It is on this material bridge where the above-mentioned shorter straight sections are arranged.

If the room provided by the axial slits is not sufficient or if a circumferentially closed heating element will not fit in the electrical connector, the carrier body may comprise a circumferential gap. For example, the carrier body may comprise a first edge section and a second edge section spaced apart from the first edge section perpendicular to the receiving direction. In particular, the first and second edge section may be separated by the circumferential gap. The circumferential gap may thus extend through the carrier body along the receiving direction and penetrate the carrier body completely. The heating wire may extend from the first edge section to the second edge section, not across the circumferential gap, but rather tracing the shape of the carrier body.

According to another possible embodiment, the heating element may comprise a first supply contact and a second supply contact both held by the carrier body. These supply contacts can be used for connecting the heating element to a power source, e.g. via a PCB. For example, the typical 12-volt electrical system of the electric vehicle may be used as the power source. Likewise, electrical systems with other voltage levels, such as 24 V or 48 V, can serve as the power source.

In particular, the first supply contact may be held by the carrier body at the first edge section, while the second supply contact may be held at the second edge section. Herein, each supply contact may be located on the corresponding edge section or on an axial extension of the corresponding edge section. The heating wire may extend from the first supply contact to the second supply contact. For this purpose, solderless wire terminals may be used as supply contacts. Alternatively, the heating wire may be directly soldered or welded to the PCB at its ends.

The object defined in the outset is also achieved by an electrical connector comprising a heating element according to any one of the above embodiments and a mating interface configured to be mated with a complementary interface of a mating connector, wherein the mating interface is received in the cavity of the heating element.

The electrical connector benefits from the advantages and functions of the heating element described above. In particular, the heating element can be used for drying the electrical connector's mating interface to obviate frost.

Optionally, the heating element may be configured as a heating module that can be assembled in the electrical connector. This not only facilitates maintenance and repair of the heating element, but also enables retrofitting of existing electrical connectors with the heating element. Alternatively, the heating element may be an integral part of the housing of the electrical connector. For example, the housing may be overmolded onto the heating wire.

The initial object is further achieved by a connector assembly comprising the above electrical connector and a mating connector with a complementary interface configured to be mated with the mating interface of the electrical connector. In a mated state of the electrical connector and the mating connector, the complementary interface is received in the cavity of the heating element together with the mating interface.

The connector assembly benefits from the advantages and functions of the heating element described above. In case the mating interface and the complementary interface freeze together, the heating element can be used to defrost the connector assembly reliably and efficiently.

Moreover, the initial object is achieved by a manufacturing method of the heating element. The method comprises the step of stringing the heating wire in a meandering pattern onto the carrier body, wherein the carrier body is arched around the cavity for receiving the mating interface along the receiving direction and wherein an average spatial trajectory of a stringing movement that creates the meandering pattern extends circumferentially with respect to the receiving direction.

Herein, the average spatial trajectory represents a mean direction, a principal direction, a dominant direction and/or a geodesic path of the stringing movement. This method can be implemented in a purely mechanical manner and thus represents an easy way of manufacturing the heating element that has the above-described advantages and functions.

In the following, exemplary embodiments are described with reference to the figures. In the figures, the same reference numerals are used for elements that correspond to one another in terms of their function and/or structure. As described above, an aspect of an embodiment can be omitted if its technical effects is not needed for a particular application, and vice versa: an aspect that is not part of a specific embodiment may be added if its technical effect is advantageous in a specific application.

In the figures:
- Fig. 1: shows a schematic perspective view of a heating element according to a possible embodiment;
- Fig. 2: shows a schematic front view of the heating element from Fig. 1;
- Fig. 3: shows an exploded, perspective view of the heating element from Fig. 1;
- Fig. 4: shows a partially exploded, perspective view of an electrical connector according to a possible embodiment;
- Fig. 5: shows a sectional view of a connector assembly according to a possible embodiment;
- Fig. 6: shows a detailed perspective view of the heating element from Fig. 1;
- Fig. 7: shows a detailed perspective view of the heating element according to another possible embodiment; and
- Fig. 8: shows a schematic perspective view of the heating element according to another possible embodiment.

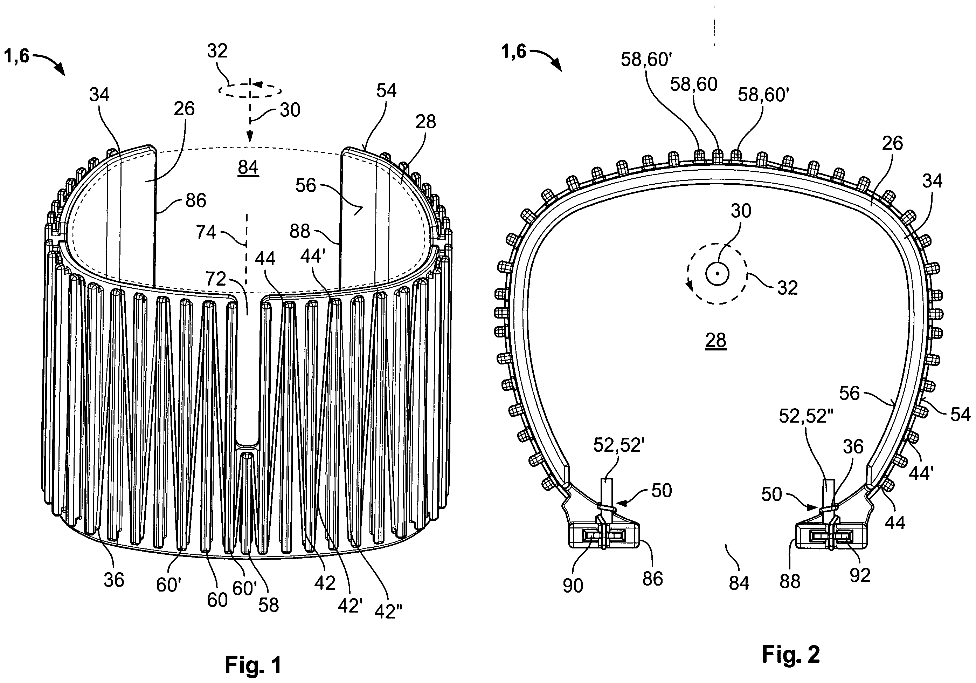

In the following, the schematic structure of a heating element 1, an electrical connector 2 and a connector assembly 4 will be explained with reference to Figs. 1 to 8.

As can be seen in Fig 1, the heating element 1 may be a standalone component configured as a heating module 6 that can be assembled in the electrical connector 2. In other words, the heating element 1 can be used as a separable part of the electrical connector 2. Alternatively, the heating element 1 may be an integral part of a housing 8 of the electrical connector 2.

The electrical connector 2 may be a plug 10 or socket 12 of an outdoor charging unit 14, in particular a charging inlet 16 of an electric vehicle (not shown). There, the heating element 1 functions as a means of frost protection, frost prevention and frost removal for a mating interface 18 of the electrical connector 2. The mating interface 18 is configured to be mated with a complementary interface 20 of a mating connector 22. As such, the mating interface 18 may be a male, female or hermaphrodite interface with suitable contact terminals 24.

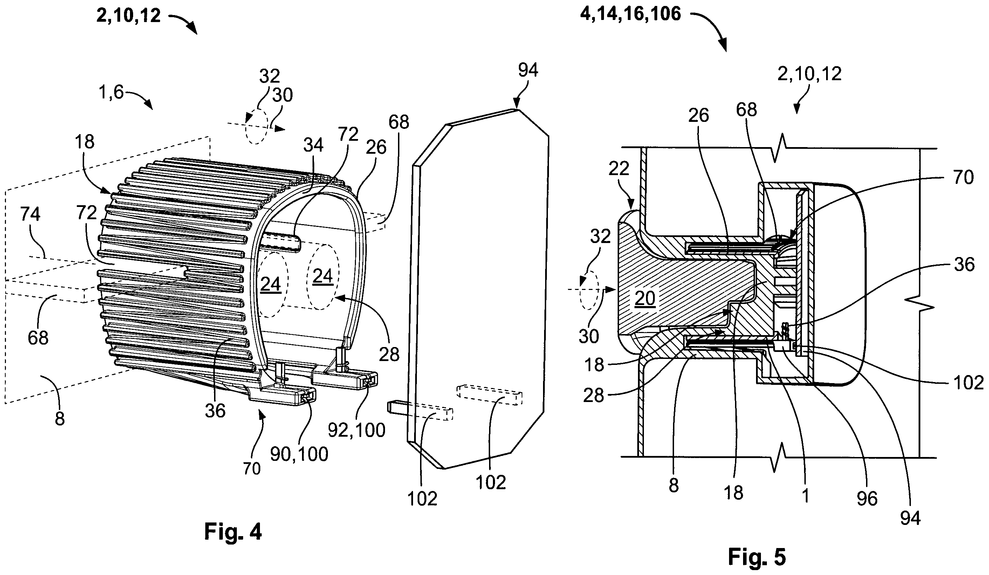

As shown in Fig. 1, the heating element 1 comprises a carrier body 26 that is at least sectionally arched around a cavity 28. Herein, the cavity 28 is configured to receive the mating interface 18 along a receiving direction 30. In other words, the carrier body 26 can be placed around the mating interface 18, as is shown in Fig. 4.

The carrier body 26 may be a single-piece plastic component made by injection molding or additive manufacturing. The carrier body 26 may also be made of other materials as long as its temperature stability is guaranteed at 90°C or more. In particular, the carrier body 26 may be made of an electrically insulating, but thermally conductive material. Further, the thermal conductivity of the carrier body 26 may be increased by additives such as carbon fibers.

The carrier body 26 is arched around the cavity 28 in that it comprises a shape that completely encloses or at least partially surrounds the cavity 28 in a circumferential direction 32 with respect to the receiving direction 30. For example, the carrier body 26 may comprise a cuff-, collar-, sleeve- or box-shaped hollow structure 34. The cavity 28 may be located within and defined by said hollow structure 34.

The concrete shape of the hollow structure 34 is prescribed by the design of the specific electrical connector 2 where the heating element 1 is to be used. For example, the heating element 1 may be adapted for use in charging inlets 16 according to NACS or other charger standards. In particular, the shape of the hollow structure 34 and the entire carrier body 26 may fit the dimensions of the mating interface 18 and an interior layout of the electrical connector 2. That is, the heating element 1 can be integrated into the electrical connector 2 in a space around the mating interface 18.

The carrier body 26 holds a heating wire 36. The heating wire 36 may have a resistivity of at least 1 µQm, in particular at least 1.1 µΩm, more particular at least 1.5 µΩm. In other words, the heating wire may be made of a material with a relatively high resistivity such as Nichrome or other types of Nickel-Chromium Alloys, Kanthal or other types of Iron-Chromium-Aluminum Alloys, Cupronickel, Constantan or other types of Copper-Nickel Alloys or Tungsten. Along its entire length, the heating wire 36 may be in direct contact with the carrier body 26 so as not to lose any heat transfer surface by "hanging in the air".

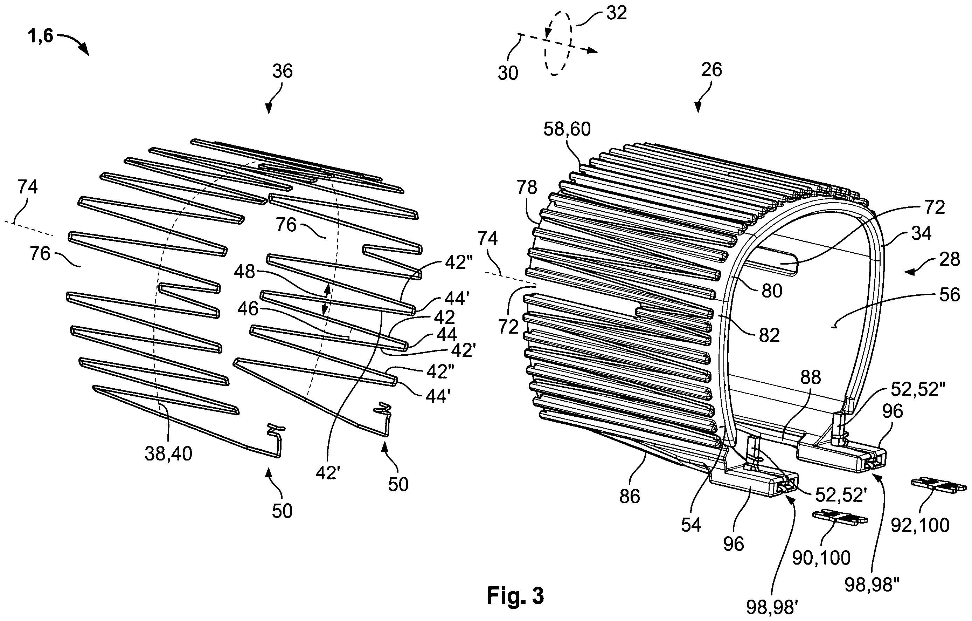

As can be seen in the exploded view of Fig. 3, the heating wire 36 extends circumferentially with respect to the receiving direction 30 in a meandering pattern. Herein, the meandering pattern may follow a zigzag line. Likewise, the meandering pattern may follow a sinuous line, serpentine line, sawtooth line, square-wave line or any other arbitrary line that regularly or irregularly deviates away from and back towards a centerline 38. The centerline 38 of the meandering pattern extends circumferentially with respect to the receiving direction 30 and can be defined by an equalizing line 40 that on average has the least square distance from each point of the heating wire 36.

By extending circumferentially with respect to the receiving direction 30, the heating wire 36 can trace the shape of the carrier body 26 and hence also completely encloses or at least partially surrounds the cavity 28 in the circumferential direction 32. Thus, thermal energy emitted by the heating wire 36 can be concentrated in the cavity 28 (i.e. the to-be-heated area).

In contrast to wires of known heating elements (not shown) that are helically coiled around the to-be-heated area, the heating wire 36 with the meandering pattern does not have to follow any uniform path. In other-words, the heating wire 36 can be routed in a way that can be easily adapted to any irregular geometry surrounding the mating interface 18, since the meandering pattern provides two additional degrees of freedom (i.e. one degree of freedom allows the heating wire 36 to be routed towards the centerline 38 and one degree of freedom allows the heating wire 36 to be routed away from the centerline 38).

As can be seen in Fig. 3, the heating wire 36 may comprise multiple straight sections 42 interposed by multiple curve sections 44. The curve sections 44 may be obtained by bending or folding an originally straight shape or by deep drawing, stamping, extruding or primary forming an already curved shape.

The respective straight sections 42 and the respective curve sections 44 may be distributed circumferentially with respect to the receiving direction 30. In other words, each straight section 42 may have at least one neighboring straight section 42' in the circumferential direction 32. Likewise, each curve section 44 may have at least one neighboring curve section 44' in the circumferential direction 32. The straight sections 42 may be grouped into pairs of neighboring straight sections 42, 42' and the curve sections 44 may be grouped into pairs of neighboring curve sections 44, 44'. Herein, neighboring straight sections 42, 42' may be connected by one and the same curve section 44, while neighboring curve sections 44, 44' are each connected to different straight sections 42.

Fig. 3 shows that neighboring straight sections 42, 42' may be arranged at an acute angle with respect to each other. In other words, neighboring straight sections 42, 42' may enclose an angle range of 23° +/- 22°, that is an angle 46 between 1° and 45°. Moreover, next-nearest straight sections 42, 42" may be mutually parallel in that a distance 48 between them remains constant along their entire length. Herein, next-nearest straight sections 42, 42" are two straight sections 42 that are not immediately neighboring, but secondary neighboring. In other words, the next-nearest straight sections 42, 42" have their primary neighboring straight section 42' located between them.

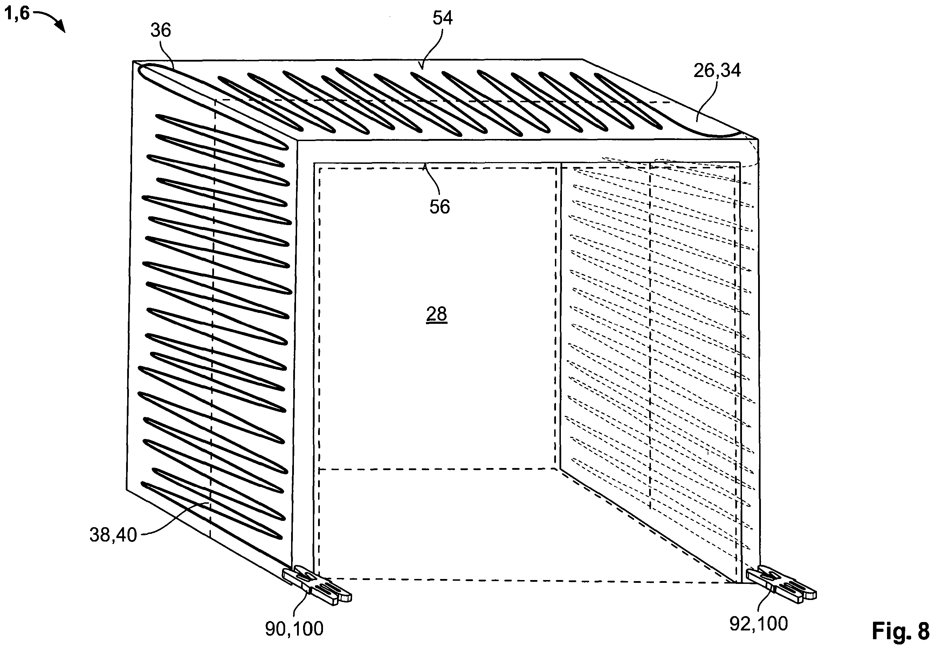

Ends 50 of the heating wire 36 may be wound around fixation posts 52 of the carrier body. Alternatively, the ends 50 of the heating wire 36 may be glued to the carrier body 26 or the carrier body 26 may be overmolded at least onto the ends 50 of the heating wire 36. Moreover, the carrier body 26 may be overmolded onto the entire heating wire 36. Thereby, the heating wire 36 may extend within the carrier body 26 (see Fig. 8).

In the embodiment of Fig. 1, the heating wire 36 extends at least sectionally on an outer surface 54 of the carrier body 26, the outer surface 54 facing away from the cavity 28. Alternatively or additionally, the heating wire 36 may at least sectionally extend on an inner surface 56 of the carrier body 26, the inner surface 56 facing towards the cavity 28.

The carrier body 26 may comprise a holding structure 58 for the heating wire 36. In particular, the heating wire 36 may be strung on the holding structure 58. For example, the holding structure 58 may comprise a plurality of holding ridges 60, each extending along the receiving direction 30. As can be seen in Fig. 2, the holding ridges 60 may be distributed circumferentially with respect to the receiving direction 30. Moreover, the holding ridges 60 may protrude from the hollow structure 34 radially with respect to the receiving direction 30.

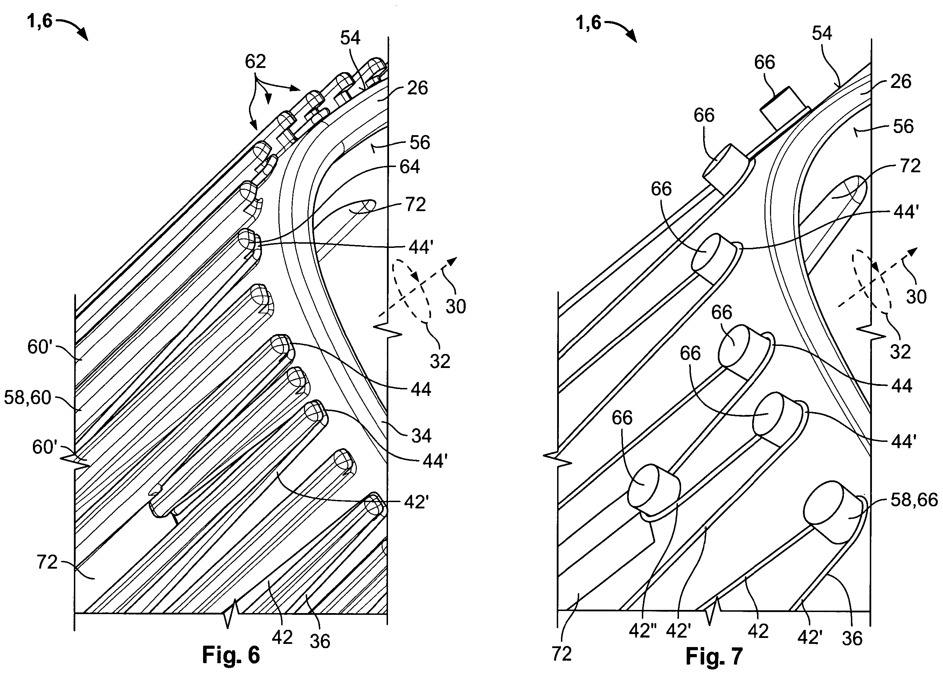

Each holding ridge 60 may have a straight, elongated rib or fin shape and may comprise two ridge ends 62 aligned along the receiving direction 30. Further, on each holding ridge 60, one of the curve sections 44 of the heating wire 36 may be arranged. In particular, each curve section 44 may wrap, loop or lead around one of the ridge ends 62 of its corresponding holding ridge 60. The curve sections 44 may be arranged alternately on the ridge ends 62. Each ridge end 62 may comprise an overhang 64 that prevents the corresponding curve section 44 from radially sliding off the ridge end 62 (see Fig. 6).

As can be seen in Fig. 6, each holding ridge 60 may have at least one neighboring holding ridge 60' in the circumferential direction 32. Between two neighboring holding ridges 60, 60', one of the straight sections 42 of the heating wire 36 may extend respectively. Hence, the holding ridges 60 can separate and insulate the neighboring straight sections 42, 42' from each other. According to an alternative embodiment shown in Fig. 7, the holding structure 58 may be formed by holding posts 66 that are arranged alternately and distributed circumferentially with respect to the receiving direction 30.

As is shown in Fig. 4, the housing 8 of the electrical connector 2 may have, as part of its interior layout, reinforcement ribs 68 that extend towards the mating interface 18 received in the cavity 28. For the heating element 1, these reinforcement ribs 68 represent an obstacle that is to be avoided. In order to still fit into the space 70 around the mating interface 18, the carrier body 26 may comprise at least one axial slit 72 extending along the receiving direction 30.

The at least one axial slit 72 may have an angular position 74 that corresponds to the position of the obstacle from the interior layout of the housing 8. Depending on the number of reinforcement ribs 68, the carrier body 26 may comprise multiple such axial slits 72. These axial slits 72 may be arranged at different angular positions 74 in regular or irregular intervals. In each axial slit 72, one or more reinforcement ribs 68 can enter. In other words, the axial slits 72 of the carrier body 26 make room for the reinforcement ribs 68.

As can be seen in Fig. 3, those straight sections 42 that are overlapping with the axial slits 72 in terms of their angular positions 74 may be shorter than the remaining straight sections 42 that have different, angular positions that do not overlap with the axial slits 72. Hence, the heating wire 36 may swerve around and avoid any axial slit 72 so as to stay clear from and not enter the room provided for the reinforcement ribs 68. That is, blank spaces 76 may be present and may interrupt an otherwise periodic and uniform meandering pattern of the heating wire 36 wherever an axial slit 72 is located.

Fig. 3 also shows that the axial slits 72 extend through the carrier body 26 along the receiving direction 30, but do not penetrate the carrier body 26 completely. In other words, the axial slits 72 extend from one rim 78 of the carrier body 26 along the receiving direction 30 more than halfway through the carrier body 26, yet they do not reach an opposite rim 80 of the carrier body 26. Instead, a material bridge 82 remains between the respective axial slits 72 and the opposite rim 80. It is on these material bridges 82 where the above-mentioned shorter straight sections 42 are arranged. To fit the heating wire 36 on these material bridges 82, the meandering pattern is locally shifted, shortened or narrowed.

To make room for even bigger obstacles from the interior layout of the housing 8, the carrier body 26 may comprise a circumferential gap 84 (see Fig. 2). For example, the carrier body 26 may comprise a first edge section 86 and a second edge section 88 spaced apart from the first edge section 86 perpendicular to the receiving direction 30. Specifically, the first edge section 86 and the second edge section 88 may be separated by the circumferential gap 84. The circumferential gap 84 may thus extend through the carrier body 26 along the receiving direction 30 and penetrate the carrier body 26 completely. The heating wire 36 may extend from the first edge section 86 to the second edge section 88, not across the circumferential gap 84, but rather tracing the shape of the carrier body 26.

In Fig. 2, it is shown that the heating element 1 may comprise a first supply contact 90 and a second supply contact 92 both held by the carrier body 26. These supply contacts 90, 92 can be used for connecting the heating element 1 via a PCB 94 to a power source. For example, the typical 12-volt electrical system of the electric vehicle may be used as the power source.

In particular, the first supply contact 90 may be held by the carrier body 26 at the first edge section 86, while the second supply contact 92 may be held at the second edge section 88. Herein, each supply contact 90, 92 may be located on the corresponding edge section 86, 88 or on an axial extension 96 of the corresponding edge section 86, 88. Each axial extension 96 may form a pocket 98 for receiving the corresponding supply contact 90, 92 in a form-fit and/or force-fit.

The heating wire 36 may extend from the first supply contact 90 to the second supply contact 92. For this purpose, solderless wire terminals 100 may be used as supply contacts 90, 92. These wire terminals 100 may clamp the respective heating wire ends 50 while engaging with surface-mounted terminals 102 of the PCB 94 (see Fig. 4). Alternatively, the heating wire 36 may be directly soldered or welded to traces (not shown) of the PCB at its ends 50.

A manufacturing method of the heating element 1 comprises the step of stringing the heating wire 36 in the meandering pattern onto the carrier body 26. In particular, the heating wire 36 may be repeatedly passed around the nearest holding ridge 60 and continue between the subsequent pair of neighboring holding ridges 60, 60'. An average spatial trajectory of this stringing movement extends circumferentially with respect to the receiving direction 30. Herein, the average spatial trajectory represents a mean direction, a principal direction, a dominant direction and/or a geodesic path of the stringing movement that creates the meandering pattern.

Before the stringing step, a trailing end 50 of the heating wire 36 may be wound around a first fixation post 52' of the carrier body 26. Next, the heating wire 36 is passed across a first pocket 98' of the carrier body 26. After the stringing step, the heating wire 36 is passed across a second pocket 98" of the carrier body 26. Subsequently, a leading end 50 of the heating wire 36 may be wound around a second fixation post 52" of the carrier body 26.

Lastly, the first supply contact 90 may be inserted in the first pocket 98', thereby clamping the heating wire 36 there. Likewise, the second supply contact 92 may be inserted in the second pocket 98", thereby clamping the heating wire 36 there. Optionally, the first fixation post 52' and the second fixation post 52" may be broken off, once the supply contacts 90, 92 hold the heating wire 36 in their respective pockets 98', 98".

Since the heating element 1 surrounds the mating interface 18 within the electrical connector 2, it can be used for obviating frost and humidity-caused corrosion by drying the mating interface 18. As is shown in Fig. 5, both the mating interface 18 and the complementary interface 20 of the mating connector 22 may be received in the cavity 28 of the heating element 1 during a mated state 106 of the electrical connector 2 and the mating connector 22. Thus, when the electrical connector 2 with the heating element 1 is part of the connector assembly 4, which further comprises the mating connector 22 with the complementary interface 20, the heating element 1 can be used to defrost the connector assembly 4 in case the mating interface 18 and the complementary interface 20 freeze together.

### REFERENCE NUMERALS

- 1: heating element
- 2: electrical connector
- 4: connector assembly
- 6: heating module
- 8: housing
- 10: plug
- 12: socket
- 14: outdoor charging unit
- 16: charging inlet
- 18: mating interface
- 20: complementary interface
- 22: mating connector
- 24: contact terminal
- 26: carrier body
- 28: cavity
- 30: receiving direction
- 32: circumferential direction
- 34: hollow structure
- 36: heating wire
- 38: centerline
- 40: equalizing line
- 42, 42', 42": straight section
- 44, 44': curve section
- 46: angle
- 48: distance
- 50: end
- 52, 52', 52": fixation post
- 54: outer surface
- 56: inner surface
- 58: holding structure
- 60, 60': holding ridge
- 62: ridge end
- 64: overhang
- 66: holding post
- 68: reinforcement rib
- 70: space
- 72: axial slit
- 74: angular position
- 76: blank space
- 78: rim
- 80: opposite rim
- 82: material bridge
- 84: circumferential gap
- 86: first edge section
- 88: second edge section
- 90: first supply contact
- 92: second supply contact
- 94: PCB
- 96: axial extension
- 98, 98', 98": pocket
- 100: wire terminal
- 102: surface-mounted terminal
- 106: mated state

## Claims

1. Heating element (1) for a mating interface (18) of an electrical connector (2), wherein the heating element (1) comprises:
- a cavity (28) configured to receive the mating interface (18) along a receiving direction (30);
- a carrier body (26) at least sectionally arched around the cavity (28); and
- a heating wire (36) held by the carrier body (26),
wherein the heating wire (36) extends circumferentially with respect to the receiving direction (30) in a meandering pattern.

2. Heating element (1) according to claim 1, wherein the heating wire (36) comprises multiple straight sections (42) interposed by multiple curve sections (44).

3. Heating element (1) according to claim 2, wherein neighboring straight sections (42, 42') are arranged at an acute angle (46) with respect to each other.

4. Heating element (1) according to claim 2 or 3, wherein next-nearest straight sections (42, 42") are mutually parallel.

5. Heating element (1) according to any one of claims 1 to 4, wherein the heating wire (36) at least sectionally extends within a material of the carrier body (26).

6. Heating element (1) according to any one of claims 1 to 5, wherein the heating wire (36) at least sectionally extends on an outer surface (54) of the carrier body (26) facing away from the cavity (28) or on an inner surface (56) of the carrier body (26) facing towards the cavity (28).

7. Heating element (1) according to any one of claims 1 to 6, wherein the carrier body (26) comprises a holding structure (58) and wherein the heating wire (36) is strung on the holding structure (58).

8. Heating element (1) according to claim 7, wherein the holding structure (58) comprises a plurality of holding ridges (60), each extending along the receiving direction (30), wherein the plurality of holding ridges (60) is distributed circumferentially with respect to the receiving direction (30).

9. Heating element (1) according to any one of claims 1 to 8, wherein the carrier body (26) comprises at least one axial slit (72) extending along the receiving direction (30), and wherein the heating wire (36) swerves around the at least one axial slit (72).

10. Heating element (1) according to any one of claims 1 to 9, wherein the carrier body (26) comprises a first edge section (86) and a second edge section (88) spaced apart from the first edge section (86) perpendicular to the receiving direction (30), and wherein the heating wire (36) extends from the first edge section (86) to the second edge section (88).

11. Heating element (1) according to any one of claims 1 to 10, wherein the heating element (1) comprises a first supply contact (90) and a second supply contact (92) held by the carrier body (26), and wherein the heating wire (36) extends from the first supply contact (90) to the second supply contact (92).

12. Heating element (1) according to any one of claims 1 to 11, wherein the heating wire (36) has a resistivity of at least 1 µΩm.

13. Electrical connector (2) comprising a heating element (1) according to any one of claims 1 to 12 and a mating interface (18) configured to be mated with a complementary interface (20) of a mating connector (22), wherein the mating interface (18) is received in the cavity (28) of the heating element (1).

14. Connector assembly (4) comprising an electrical connector (2) according to claim 13 and a mating connector (22) with a complementary interface (20) configured to be mated with the mating interface (18) of the electrical connector (2), wherein, in a mated state (106) of the electrical connector (2) and the mating connector (22), the complementary interface (20) is received in the cavity (28) of the heating element (1).

15. Method of manufacturing a heating element (1) for a mating interface (18) of an electrical connector (2), the method comprising the steps of stringing a heating wire (36) in a meandering pattern onto a carrier body (26), wherein the carrier body (26) is arched around a cavity (28) for receiving the mating interface (18) along a receiving direction (30) and wherein an average spatial trajectory of a stringing movement that creates the meandering pattern extends circumferentially with respect to the receiving direction (30).
